# EUROPEAN PATENT APPLICATION

(11) **EP 4 681 979 A1**
(43) Date of publication of application: **21.01.2026**
(21) Application number: 24188616.7
(22) Date of filing: 15.07.2024
(51) Int. Cl.: B60L 53/30, B60L 53/62, B60L 53/63, B60L 53/65, B60L 53/66, B60L 53/67, B60L 53/68, H04L 67/12, H04L 69/18

(54) **CONTROLLER UNIT FOR CONTROLLING AN ELECTRIC VEHICLE (EV) SUPPLY EQUIPMENT (EVSE), EVSE, EV CHARGING INFRASTRUCTURE, AND METHOD FOR CONTROLLING AN EV CHARGING INFRASTRUCTURE**

(71) Applicant: ABB E-mobility B.V., 2629 JG Delft (NL)
(72) Inventor: COHEN, Andrew, 67061 Ludwigshafen am Rhein (DE); TOMBELLI, Fabio, 2291ZJ Wateringen (NL); ALARCON, Daniel, 28043 Madrid (ES)
(74) Representative: Zimmermann & Partner Patentanwälte mbB

(57) **Abstract**

A controller unit 100 for controlling an electric vehicle supply equipment 110, EVSE, with one or more hardware modules for charging an electric vehicle, EV, the controller unit comprising:
-a processing unit configured to detect one or more hardware modules of the EVSE;
-the processing unit 102 further configured to determine a configuration of the electric vehicle supply equipment 110, the configuration including data indicative of the detected hardware modules of the EVSE;
the controller unit 100 being further configured to dynamically determine a control scheme of the EVSE based on the determined configuration of the EVSE, wherein the processing unit 102 has a memory 106 with stored control routines, and wherein the controller unit is configured for including selected control routines in the control scheme, the selected control routines being selected from the stored control routines based on the determined configuration of the EVSE,
wherein the controller unit 100 is configured for installing and updating the control routines over a network interface,
and is further configured to control the EVSE 110 based on the determined control scheme.

## Description

### FIELD

The present disclosure relates to the control of electric vehicle supply equipment (EVSE), and more particularly to a controller unit for controlling an electric vehicle supply equipment, to an EVSE comprising at least one controller unit, to an electric vehicle charging infrastructure comprising a plurality of EVSE and to a method for controlling the electric vehicle charging infrastructure.

### BACKGROUND

An electric vehicle is used for transportation and uses a rechargeable battery as an energy source. Chemical energy stored in the rechargeable battery is converted to electrical energy provided by the battery to one or more electric motors of the electric vehicle that then convert the electrical energy into kinetic energy of the electric vehicle thereby providing a means of transport based on electricity. While electric vehicles have many advantages, its rechargeable battery needs to be recharged regularly, which requires an electric vehicle charging infrastructure.

An electric vehicle charging infrastructure provides electric energy to the rechargeable battery for the further use by the electric vehicle.

A vehicle charging infrastructure typically comprises one or a plurality of electric vehicle supply equipment (EVSE) that may present several topologies. EVSEs can be of different types, each type having specific hardware, specific capabilities and being designated specific roles within the vehicle charging infrastructure. Examples of types of EVSEs include power rectifiers, dispensers, HMI stations, or combined systems combining one or more of these functions in a combined system. Thus, the EVSEs can be all-in-one systems in which at least some of the functionalities of the vehicle charging infrastructure are integrated in a single EVSE, or split systems in which at least some of the functionalities of the vehicle charging infrastructure are distributed over several EVSEs. In case of different EVSE types being provided, each of these types typically has a specific control scheme different from that of other types.

For example, depending on the type of EVSE, an EVSE may have to handle the power delivery of electric power towards a rechargeable battery of an electric vehicle connected to the EVSE for recharging. In addition or alternatively, an EVSE may provide additional functionality like for example a data communication with the electric vehicle.

The electric vehicle can be connected to the EVSE for recharging the rechargeable battery via a vehicle interface that typically also handles data communication with the electric vehicle.

The power delivery equipment of the EVSE and the vehicle interface may for example be located in a single enclosure and form a so called "all in one" EVSE system compactly located in the single enclosure.

A vehicle charging infrastructure may be split in a number of different EVSEs, and may for example comprise a power delivery system delivering power to one or more power cabinets containing each a separate vehicle interface forming one or more charging posts.

In each of these topologies additional services and network connectivity may be provided to and/or from the electric vehicle.

There is therefore the need to handle a plurality of topologies efficiently and to improve the control of the EVSE in view of the plurality of topologies.

### SUMMARY

The invention is defined by the independent claims. The dependent claims define further embodiments of the invention.

The present disclosure provides a controller unit for controlling an electric vehicle supply equipment, EVSE, with one or more hardware modules for charging an electric vehicle, EV, the controller unit comprising:
- a processing unit configured to detect one or more hardware modules of the EVSE;
- the processing unit further configured to determine a configuration of the electric vehicle supply equipment, the configuration including data indicative of the detected hardware modules of the EVSE;

the controller unit being further configured to dynamically determine a control scheme of the EVSE based on the determined configuration of the EVSE, wherein the processing unit has a memory with stored control routines, and wherein the controller unit is configured for including selected control routines in the control scheme, the selected control routines being selected from the stored control routines based on the determined configuration of the EVSE,
wherein the controller unit is configured for installing and updating the control routines over a network interface,
and is further configured to control the EVSE based on the determined control scheme.

The present disclosure further provides an electric vehicle supply equipment, EVSE, comprising at least one controller unit according to the present disclosure.

The present disclosure further provides an electric vehicle charging infrastructure comprising a plurality of electric vehicle supply equipment, EVSE according to the present disclosure, and wherein the at least one controller unit of each of the electric vehicle supply equipment of the plurality of electric vehicle supply equipment is configured with the same stored control routines, in particular with the same control routines installed and/or updated via the network interface of the at least one controller unit.

The present disclosure further provides a method for controlling the electric vehicle charging infrastructure according to the present disclosure, the method comprising: providing a common software on each controller unit, and controlling each EVSE based at least in part on the control scheme determined by the controller unit.

### BRIEF DESCRIPTION OF THE DRAWINGS

FIG. 1 shows an EVSE with a controller unit for controlling the EVSE according to embodiments.
FIG. 1A shows an EVSE with a controller unit for controlling the EVSE according to embodiments.
FIG. 2 shows a charging infrastructure including a plurality of different EVSEs according to embodiments.
FIG. 3 shows a further charging infrastructure including a plurality of different EVSEs according to embodiments.
FIG. 3A shows a further charging infrastructure including a plurality of different EVSEs according to embodiments.
FIG. 4 shows a flow chart illustrating a method for controlling an electric vehicle charging infrastructure according to embodiments.
Fig. 5 shows an EVSE including a controller unit and hardware modules according to embodiments.

### DETAILED DESCRIPTION

A detailed description of embodiments of the present disclosure is presented in the following. Different embodiments can be combined with each other, unless otherwise stated or unless they are mutually exclusive.

According to the present disclosure an EVSE is an equipment of a charging infrastructure that has a function for suppling electric energy and optionally data to and from an electric vehicle for charging the electric vehicle.. Examples of types of EVSEs include power rectifiers, dispensers, HMI stations, or combined systems combining one or more of these functions in a combined system. The supply of electric energy may be provided directly for example with the direct control of power electronic devices configured to deliver the electric power to the electric vehicle or, in addition or alternatively, the supply of energy may be provided via switching devices controlled to receive power from another source of electric power, like for example power electronic devices located at a location that may be different than the location of the EVSE.

An EVSE has at least one control unit configured to control the EVSE.

Several individual EVSE, each one with at least one controller unit for controlling the EVSE, may be interconnected to form an overall distributed EVSE system (split EVSE system) within a charging infrastructure. In such a distributed EVSE system or charging infrastructure, the controller units of the individual EVSE operate in a coordinated manner to provide the overall functionality of the distributed system. For example, such a charging infrastructure may consist of a plurality of EVSE that may be interconnected over a network and comprise all-in-one EVSE and distributed EVSE systems.

In a distributed EVSE system the individual EVSE, each controlled by a corresponding controller unit, may provide specialized functionalities in coordination with the functionality provided by other individual EVSE in the distributed EVSE system.

An electric vehicle supply equipment (EVSE) system therefore may have a plurality of topologies and may have to provide a plurality of functions and may be formed by an individual EVSE controlled by a controller unit or by a distributed EVSE system comprising a plurality of individual EVSE that are controlled in synergy to provide the overall functionality of the distributed EVSE system. Individual EVSE forming a distributed EVSE system may therefore provide specialized functionalities.

For example, an EVSE may need to ensure that electric energy is transferred to the rechargeable battery of an electric vehicle.

The transfer of the electric energy may need a plurality of coordinated steps to be properly implemented and to ensure safety.

In particular, it is necessary to handle a vehicle connection with the electric vehicle and to safely transfer electric energy to the rechargeable battery of the electric vehicle.

In addition, a plurality of data has to be exchanged with the electric vehicle and/or with a coordinating node in other in particular to account for the transferred electric energy, in particular for billing purposes and/or in order to provide a variety of additional functionality. Therefore, in addition to the provision of electric energy, a plurality of data has to be properly exchanged and data connectivity has to be properly provided. Data may also be exchanged and/or forwarded with additional networks for a plurality of purposes including for example accounting and billing.

Different topologies for an EVSE may include a so-called all-in-one system topology, where the different functionalities are provided by equipment concentrated in a single location and enclosure.

A vehicle charging infrastructure typically comprises a plurality of electric vehicle supply equipment (EVSE) that may present several topologies. EVSEs can be of different types, each type having specific hardware, specific capabilities and being designated specific roles within the vehicle charging infrastructure. Examples of types of EVSEs include all-in-one systems or distributed (split) systems. Each of these types typically has a specific control scheme different from that of other types.

For example, an all-in-one system may include power delivery equipment and a vehicle interface in a single enclosure and may also handle directly handle the data connectivity.

Each of these different equipment (different EVSEs) has its own controller which is tailored to the specific capabilities and roles of the particular EVSE. Further, the control must be such that the EVSEs interoperate smoothly in a particular topology of the overall charging infrastructure. This requires a control scheme for each EVSE that is tailored to its specific capabilities and roles within the charging infrastructure. Implementing this control scheme is a highly complex task. This is compounded by the fact that it is desirable for the controllers to be updateable. However, deploying software updates to the various controllers of a heterogenous set of EVSEs further increases the complexity.

The above problems are at least partially solved by a controller unit comprising:
- a processing unit configured to detect one or more hardware modules of the EVSE;
- the processing unit further configured to determine a configuration of the electric vehicle supply equipment, the configuration including data indicative of the detected hardware modules of the EVSE;

the controller unit being further configured to dynamically determine a control scheme of the EVSE based on the determined configuration of the EVSE, wherein the processing unit has a memory with stored control routines, and wherein the controller unit is configured for including selected control routines in the control scheme, the selected control routines being selected from the stored control routines based on the determined configuration of the EVSE,
wherein the controller unit is configured for installing and updating the control routines over a network interface,
and is further configured to control the EVSE based on the determined control scheme.

Namely, the detection of the hardware modules may easily allow the determination of a configuration in terms of known building blocks. Appropriate control routines related to the building blocks may then be retrieved from the memory with the stored control routines to determine an overall controls scheme of the EVSE specifically tailored towards the detected hardware modules.

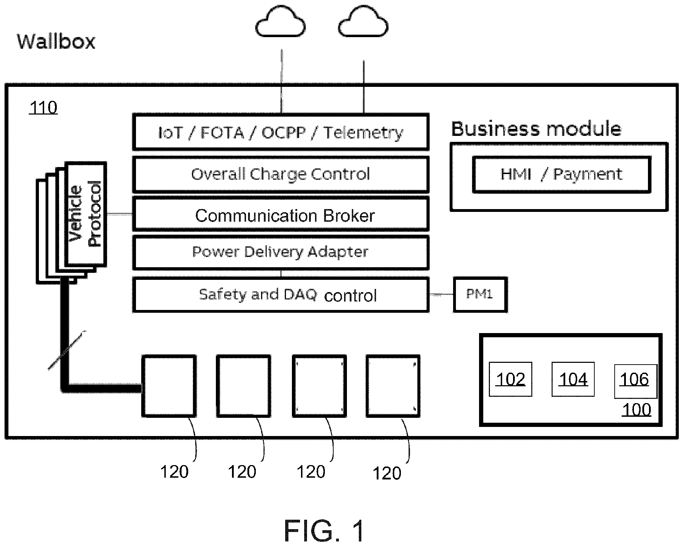

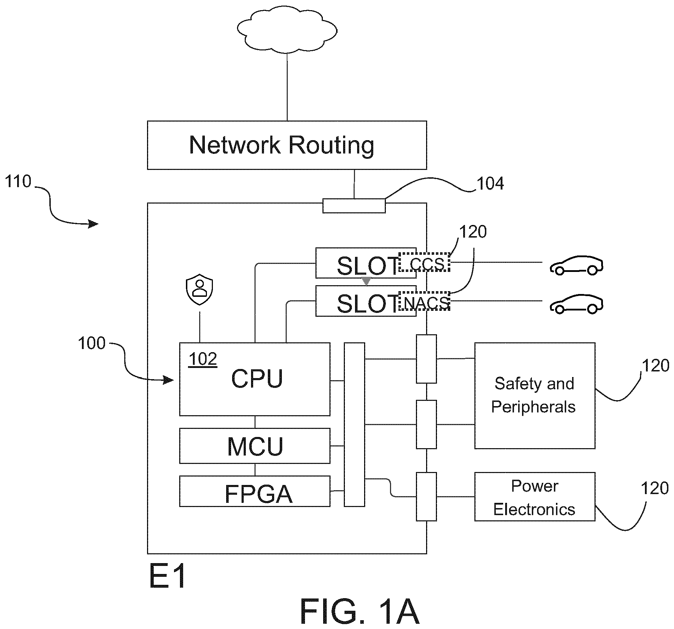

FIG. 1 and FIG 1A show an EVSE 110 with a controller unit 100 for controlling the EVSE 110 according to some embodiments of the present disclosure.

The controller unit 100 is configured to control the EVSE 110 and comprises a processing unit 102 configured to detect one or more hardware modules 120 of the EVSE.

The controller unit 100 includes a memory 106 of the processing unit configured with stored control routines.

The controller unit is configured for including selected control routines in the control scheme, the selected control routines being selected from the stored control routines based on the determined configuration of the EVSE.

For example, hardware modules 120 may related to the provision of electric energy and/or data to the electric vehicle and may comprise for example power electronic devices, switching devices, network interfaces, data acquisition modules, safety monitoring modules and the like.

The processing unit 102 of the controller unit 100 is configured to detect the presence of one or more hardware modules 120. And the controller unit 100 is configured to dynamically determine a control scheme of the EVSE 110 based on the determined configuration of the EVSE in terms of the detected hardware modules 120.

The control scheme includes control routines selected from stored control routines in the memory 106 based on the determined configuration of the EVSE.

For example, each possible hardware module 120 may be associated with a control routines stored in the memory 106 and when the presence of said hardware modules is actually detected, then the corresponding associated control routine is retrieved from the memory and included into the control scheme that then is finally used by the controller unit 100 to actually control the EVSE 110.

The use of basic building blocks both in terms of hardware modules 120 and associated control routines stored in the memory 106 allows a flexible and safe control of EVSE of different topologies.

The controller may be configured to install or update the control routines irrespective of their inclusion in the control scheme.

In some embodiments, the controller may be configured to install or update the control routines irrespective of their inclusion in the control scheme and irrespective of the actual hardware modules present in the EVSE such that upon detection of the hardware modules by the processing unit, the proper control routine can always be retrieved from the memory.

The control routines can be installed and updated over a network interface and this allows to deploy the control routines consistently over a plurality of EVSE in a vehicle charging infrastructure.

The control unit 100 is configured for installing and updating the control routines over a network interface and is configured to control the EVSE 110.

The updates allow a high flexibility while ensuring consistency and safety of the control routines and thereby also consistency and safety of the final control scheme of the EVSE 110 for all the possible configurations and topologies of the EVSE, i.e. for all the possible configurations of hardware modules actually present in the EVSE and for all the possible topologies of the EVSE in a wider EV charging infrastructure, in particular for EVSE forming an all-in-one system or a split system.

A communication interface 104 may be further present and configured to establish a communication link with at least one other controller unit of at least one other electric vehicle supply equipment, the communication interface configured to receive a configuration of the at least one other electric vehicle supply equipment and to send the configuration of the electric vehicle supply equipment to the at least one other electric vehicle supply equipment.

The control scheme of the EVSE may be further based on the configuration of the at least one other electric vehicle supply equipment received by the communication interface, if such other EVSE is connected and/or detected/discovered. Thereby, the controller can obtain data regarding the configuration of the at least one other electric vehicle supply equipment, and can adapt the control scheme of the EVSE in dependence of this information. This allows implementing a control scheme which is tailored to the configuration of the at least one other EVSE.

This is in particular advantageous in case of split-system that need to be controller in synergy to operate properly. The reciprocal adaption of the control scheme in dependence of the configuration of the at least one other EVSE in fact ensures a synergistic operation of split-system EVSE forming a distributed EVSE system.

Alternatively, a distributed EVSE system may have the topology of a split system where multiple separate charging posts are fed by power delivery equipment in one or more power cabinets that may be located at a distance from the charging posts.

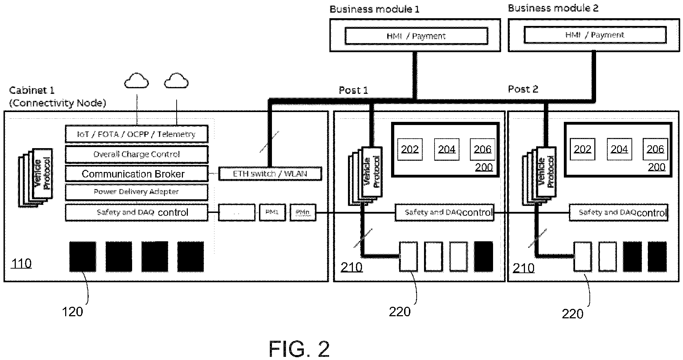

FIG. 2 shows a distributed EVSE system with a plurality of EVSEs 110, 210 according to some embodiments of the present disclosure. The EVSEs have respective controller units 200 for controlling the EVSE. For the controller unit of EVSE 110, not shown in Fig. 2, reference is made to the controller unit 100 shown in Fig. 1 and the description thereof.

In the configuration of FIG. 2, the EVSE 100 forms, together with the additional EVSEs (e.g., remote post EVSEs) 210, a distributed EVSE system. Therein, a first post EVSE 210, Post 1, and a second post EVSE 210, Post 2 are present.

Each of Post 1 and Post 2 includes a controller unit 200 for controlling the remote post EVSE 210 and comprises a respective processing unit 202, memory 206 and communication interface 204.

The split EVSE system is therefore a distributed system formed by a plurality of individual EVSEs forming separate subsystems and that need or benefit from an individual control coordinated such that the overall distributed EVSE system properly implements the required functionalities.

An EVSE with a split system topology may therefore form a distributed system of individual EVSE where different individual EVSE forming the distributed overall EVSE system are located separately and need a proper coordination to provide different functionalities, like the charging of the rechargeable batteries of one or more electric vehicles and/or the data connectivity and/or the handling of the vehicle connection.

Additional topologies and configurations are possible and an EVSE may be implemented as an even more complex distributed system of more specialized individual EVSEs, for example with additional power equipment that may be controlled in parallel and/or provide additional redundancy and error resiliency.

A EVSE may be controlled by at least a controller unit of the EVSE that is configured to detect the topology of the EVSE and to determine an appropriate control scheme in order to provide the different functionalities.

It is therefore necessary to handle the plurality of possible topologies of an EVSE and the plurality of functionalities efficiently and to efficiently control the individual EVSE forming a distributed overall EVSE system.

In particular, the controller unit of the EVSE should be efficient in order to avoid an excessive burden in terms of complexity and energy consumption and in order to prevent the risks of an erroneous control of the EVSE, for example when an erroneous software is deployed. Preventing an erroneous control is in particular necessary to ensure a safe operation of the EVSE and to prevent risks and harm for humans and/or for the electric vehicles (EVs) connected to the EVSE and to ensure the proper control and coordination of individual EVSE forming a distributed EVSE system.

In fact, an overly complex EVSE controller may be the main source of an erroneous control leading to harm to humans and machines (EVs). Also, erroneous data may be exchanged when the EVSE controller is not functioning properly.

There is therefore a need for a simple, reliable and efficient control of an EVSE.

The present invention provides an improved controller unit for controlling an EVSE that is optimized to dynamically determine a control scheme of the EVSE based on a determined configuration of the EVSE based on control routines efficiently stored in a memory of the processing unit.

The configuration of the EVSE is provided by a processing unit configured to detect one or more hardware modules of the EVSE, for example hardware modules related to the transfer of electric energy to the rechargeable battery of an electric vehicle and/or hardware modules handling the connectivity with the electric vehicle and/or the transfer of data.

The controller unit then determines an appropriate control scheme of the EVSE based on the configuration of the EVSE as determined by the processing unit configured to detect the one or more hardware modules of the EVSE.

In particular, the control routines can be efficiently configured and installed over a network interface to ensure that they are up to date and to ensure flexibility.

In some embodiments, the processing unit may be configured to further discover at least one other EVSE connected to the EVSE to form a distributed overall EVSE system.

In such embodiments, the processing unit of on EVSE is further configured to discover at least one other EVSE connected to the EVSE to form an overall distributed EVSE system.

In such embodiments, the control scheme of each individual EVSE is therefore determined based on the configuration of the EVSE itself and in addition based also on the determined configurations of the discovered EVSE connected to said individual EVSE to from an overall distributed EVSE system.

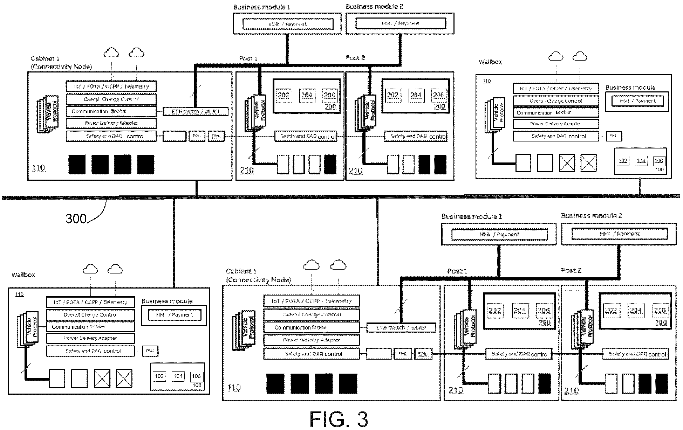

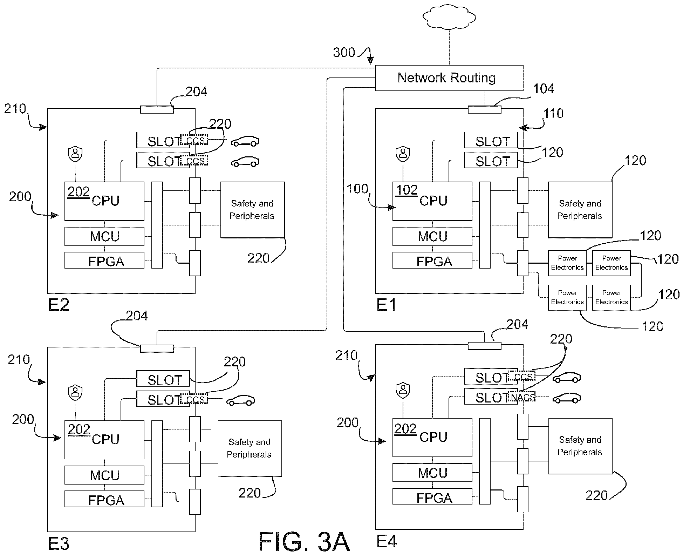

FIG. 3 and FIG 3A show a charging infrastructure including a plurality of different EVSEs according to embodiments.

The charging infrastructure comprises a plurality of EVSE (110, 210) as previously illustrated in FIG. 1 and FIG. 2.

At least one controller unit of each of the electric vehicle supply equipment of the plurality of electric vehicle supply equipment is configured with the same stored control routines, in particular with the same control routines installed and/or updated via the network interface of the at least one controller unit.

All the EVSE (110, 210) shown in FIG. 3 may be configured with the same stored control routines installed and/or updated via a common network 300 connected to the network interface of each controller unit (100, 200) of each EVSE (110, 210).

Some EVSE may be an all-in-one system and other EVSE may together form a distributed EVSE system. For example, an EVSE in a cabinet and two EVSE in remote posts may form a distributed EVSE system.

An overall electric vehicle (EV) charging infrastructure is thereby provided, comprising a plurality of EVSE according to the present disclosure. At least one controller unit of each of the electric vehicle supply equipment of the plurality of electric vehicle supply equipment is configured with the same stored control routines, in particular with the same control routines installed and/or updated via the network interface of the at least one controller unit, for example over the network 300 to which the network interfaces may be connected.

This ensures a reliable and efficient configuration of each of the EVSE and of the overall distributed EVSE system formed by the individual EVSE and provides an overall improved EV charging infrastructure that reduces the risks associated with erroneous and inefficient configurations, in particular risks that may harm humans and vehicles and/or result in an inefficient charging of the batteries of EVs.

Several topologies are possible for EVSE and/or the distributed EVSE system, in particular to provide charging stations in a EV charging infrastructure: wall boxes and so called all-in-one systems forming a single and compact EVSE where the power delivery equipment and the vehicle interface are in a single enclosure, and so-called "split systems" forming a distributed EVSE system where multiple individual EVSE may form charging posts that are fed by power delivery equipment in one or more separate power cabinets related to the distributed EVSE system formed by the individual EVSE.

Alternatively or in addition, further topologies may exist where a site controller is in place to offer site services and upstream network connectivity.

The different topologies produce a plurality of problems to be solved, including:
- the need of properly configuring the distributed EVSE system formed by the individual EVSE by properly configuring the individual EVSE to operate in synergy,
- the need to ensure the compatibility of software on the individual EVSE in the distributed EVSE system such that the individual EVSE properly behave as subsystems in the overall distributed EVSE system forming a split charging station,
- the need to consistently update the individual EVSE forming the distributed EVSE system to ensure a safe and up to date functionality of the distributed EVSE system implementing the charging station,
- the need to provide a proper error-handling in the case of a failure of one subcomponent of the distributed EVSE system, i.e. of one individual EVSE,
- the need to properly develop and deploy software and hardware which is specific to individual EVSE forming subsystems of the overall distributed EVSE system, and which is subject to multiple variations in deployment,
- the need to maintain many hardware and software variants for different functions in different topologies.
- the need of testing the compatibility between software and hardware versions across multiple distributed EVSE system topologies and product variants.
- the need to properly address and control individual EVSE and subcomponents within the distributed EVSE system and within the overall EV charging infrastructure formed by many EVSE and/or many distributed EVSE systems.

Said problems have to be solved in order to provide an overall efficiency and safety of the EVSE and of the overall charging infrastructure, in particular to avoid harm to humans and vehicles and to efficiently and properly deliver electric energy to the rechargeable batteries of the electric vehicles.

According to the present disclosure, cabinet controllers, charge post controllers (and potentially site controllers) forming EVSE have the same hardware and software load deployed to all of them. This invention describes accordingly a topology discovery mechanism, with each EVSE first determining which functions are required for its role in a distributed EVSE system providing a charging station (self-discovery), followed by communication between EVSE to properly implement a distributed EVSE system in a EV charging infrastructure.

For example, a leader EVSE (for example in a cabinet component) may for example coordinate the communication and overall charging in a centralized manner, with all other EVSE acting as secondary subsystems to form a distributed overall EVSE system.

The present disclosure also enables a unified update procedure of EVSE forming the distributed EVSE system in an electric vehicle charging infrastructure, in particular ensuring compatibility between individual EVSE.

The present disclosure, in some embodiments, further describes a pre-configured digital twin of an EVSE from order or site engineering data whose topology can be compared to the discovered topology to enable troubleshooting and installation assistance. In particular topologies related to a distributed EVSE system formed by individual EVSE in a EV charging infrastructure can therefore be compared to pre-configured digital twins in order to validate an overall configuration.

Control schemes based on the determined configuration of the EVSE (alone or further based on the configuration of at least another EVSE as received by the communication interface of the EVSE to form an overall distributed EVSE system) may provide different function.

The functions include, but are not limited to:
- coordination and handling of allocation of power delivery equipment to vehicles,
- communication to power delivery equipment via proprietary or specific hardware interfaces,
- communication to vehicles via standards such as ISO 15118, DIN 70121, CHAdeMO, etc.
- site-connected load management
- handling of internet-facing traffic, such as traffic initiated by a vehicle for certificate signing requests, VAS/VDV261
- coordinating firmware updates and distributing those to EVSEs in the EV charging infrastructure
- communication to human user interfaces such as site kiosks

The present disclosure solves the described problems providing the discussed functionalities based on:
- a single, flexible EVSE type which contains base hardware and software which can cover in particular cabinet and charge post functions if extended with more specific hardware and is sized to be capable of running its necessary functions without exhausting resources based on the controller unit of the present invention that dynamically determines a control scheme of the EVSE based on a detected configuration of the EVSE and possibly also based on the configuration of at least one other EVSE received by a communication interface of the controller unit,
- special-purpose hardware which connects to power delivery equipment and / or vehicles, and which is used for software to determine the specific EVSE function in an overall distributed EVSE system topology in a EV charging infrastructure,
- a software stack of control routines stored in the EVSE which are configured to provide the described functions,
- a detection mechanism of one or more hardware modules of the EVSE used by each EVSE in the EV charging infrastructure to determine which services it provides, optionally advertising said services and/or to determine the topology of a distributed overall EVSE system of which the individual EVSE is part,
- a configuration discovery/determination mechanism which is used by EVSEs to find where functions are distributed in the a distributed EVSE system, and to determine the overall distributed EVSE system topology,
- optionally on a comparison function which compares the discovered topology against one which was pre-engineered (for example using a digital twin), to enable troubleshooting, guidance, and visualization capabilities to field and commissioning engineers.

A controller unit for controlling an EVSE according to the present disclosure has a memory with stored control routines

Several control routines provide a control scheme running on the EVSE.

The stored control routines (software) on the controller unit of the EVSE is the same regardless of whether only handling vehicle-facing protocols has to be implemented by the EVSE (e.g. in the case of a EVSE forming a charge post in a distributed overall EVSE system formed by individual EVSE), and/or handling connectivity and/or handling coordination of charging and/or all of the above functionalities have to be implemented by the EVSE (as would be the case in a EVSE forming an all-in-one system).

In general, it's expected that coordinating and connectivity functions are handled on the same individual EVSE, but the different functionalities may alternatively be handled on different individual EVSE systems (for example due to differing connectivity setups) forming an overall distributed EVSE system.

For example, individual EVSEs forming remote posts are not expected to take over coordinating functions in a distributed EVSE system. The coordinating functions are expected to be reserved for an individual EVSE systems in a main cabinet.

For example, an EVSE located in a main cabinet may be configured with one or more hardware modules configured to
- allocate power modules to specific outlets via an overall charge control implemented by the controller unit based on requests from EVs, etc. to implement an overall charge control
- implement an appropriate switching and managing of setpoints of power modules based on the request(s) handled via the overall charge control,
- act as a main broker allowing other EVSE or systems to communicate with each other,
- coordinating the update of other components in the system providing an update coordination,
- act as the main configuration source-of-truth in the system for software configurations,
- expose commissioning and local services,

In particular, all of the hardware modules for providing all of the functionalities may be present.

EVSE that implement a connectivity function may be configured to make outbound calls to remote backends.

In particular, hardware modules of the EVSE providing connectivity functions may provide a communication with one or more of:
- am IoT client,
- an OCPP client (customer network),
- a firmware over-the-air update client configured for downloading and querying an update on the EVSE that may be installed subsequently coordinately across the charging infrastructure.
- a telemetry client.

In particular all communication can be provided in parallel and all the relative hardware modules may be present in the EVSE.

EVSE that implement a vehicle interface function may be configured with hardware modules configured to:
- instantiate a communication and communicate with vehicles via high-level protocols via directly installed vehicle interface hardware modules,
- communicate to and from a coordinating EVSE node information which is of interest to the overall charge control (i.e., when a change to the delivered power is requested by the vehicle),
- communicate to a coordinating node with higher level status information for the purposes of having status updates,
- communicating, during debugging sessions, fine-grained information for diagnostics and telemetry.

An EVSE according to the present disclosure may for example be a wall box that forms an all in one EVSE providing coordinating, connectivity and vehicle connection functionality all implemented by corresponding hardware modules.

In the single EVSE wall box example, there is a single controller unit of the EVSE which is populated with hardware modules for charging the EV and providing the additional functionality.

The single EVSE inside the wall box covers the functions of handling vehicle-facing protocols, of providing connectivity, and of coordinating the charging.

According to another different example, a distributed EVSE system may be formed by an individual EVSE in a cabinet, by two EVSE forming remote posts and providing remote human machine interfaces (HMIs)

The individual EVSE in the cabinet may provide coordinating and connectivity functions, whereas the vehicle connection is handled by the two EVSE forming the remote posts.

In this further example, there are three EVSE with respective controller units: one EVSE with a controller unit in the cabinet, one EVSE with a controller unit in the first post (post 1), one EVSE with a controller unit in the second post (post 2).

And two business hardware modules may be present.

The cabinet EVSE handles connectivity, coordination, and handles the power delivery.

Each remote post EVSE only handles the physical connection to the vehicle and the vehicle-facing high-level communication protocols.

The EVSE implementing the coordinating function will have assigned outlet numbers to each outlet (which is part of the distributed system).

The determination of the control scheme of each EVSE may be carried out based on the detection of the described hardware modules of the EVSE.

The same base software image runs on each EVSE.

In order for each EVSE to initially know which responsibilities it takes in the system, as well as for it to know which equipment it contains, a discovery process is carried out by a processing unit of a control unit for controlling the EVSE in order to detect the hardware modules of the EVSE and to determine the configuration of the EVSE including data indicative of the detected hardware modules of the EVSE.

The determination of the configuration and the detection of the hardware modules to implement the discovery process is a hierarchical process and varies based on whether a change/update is expected or not.

### Factory pre-configuration

As part of the factory process, all EVSE are provisioned with x.509 certificates including an identity of the EVSE and having a long life. The certificates are signed by an authority with the private key backed in hardware in the EVSE.

This is for the purpose of identification within the EV charging infrastructure. The keys of these certificates are stored securely in hardware.

Alternatively, or in addition the factory certificates may be exchanged with an individual EVSE certificate after a pairing process for example in accordance with IEEE 802.1AR secure device identity for use in authentication.

In order to self-discover the configuration of the EVSE the processing unit of the controller unit for controlling the EVSE checks the status, types, identities of the hardware modules of the EVSE to determine the presence and characteristics of the hardware modules of the EVSE.

The processing unit may implement the checks via an FPGA attached between the hardware modules and the controller unit.

In a distributed EVSE system, the controller unit of the EVSE (of each EVSE in the distributed EVSE system) may further comprise a communication interface, the processing unit of the EVSE (of each EVSE in the distributed system) being further configured to discover at least one other EVSE connected to the EVSE via the communication interface.

The communication interface may then establish a communication link with at least one other controller unit of at least one other electric vehicle supply equipment in the distributed EVSE system.

The communication interface may be configured to receive a configuration of the at least one other electric vehicle supply equipment and to send the configuration of the electric vehicle supply equipment to the at least one other electric vehicle supply equipment, i.e. the configurations of the different EVSE in the distributed EVSE system are respectively communicated and received among the different EVSE in the distributed EVSE system.

The control scheme of the EVSE (of each EVSE in the distributed system) is further based on the configuration of the at least one other electric vehicle supply equipment received by the communication interface.

For example, it may be envisioned that the only coordinating EVSE in a distributed EVSE system is the EVSE in the main cabinet, some automatic process (e.g. mating via a physical installation which is only present in the main cabinet or via robust logic /rules) is in place to find the coordinating EVSE. Other EVSE in the distributed EVSE system may then operate at least in part in function of the coordinating EVSE.

For example, if the EVSE does not have vehicle interface modules, and is also connected to a fieldbus/network (e.g. EtherCAT or CAN) then a role as coordinating EVSE may be derived. Alternate embodiments may determine a coordinating EVSE based on physical mating of connectors/pins which are connected or shorted in the enclosure, or any other mechanisms of signaling that the node has power-delivery capabilities.

It might also alternatively or in addition for example be defined that if a EVSE is detected to be configured for implementing both a coordinating function and a vehicle interface connection, then the EVSE is identified as an all-in-one system and the services for discovery resolve locally and no external discovery happens.

A common discovery mechanism on local networks is DNS-SD (RFC 6763). This can be used together with mDNS (RFC 6762) and in the case that there isn't a central DNS server available.

If using DNS-SD, as is possible with the avahi service (and assuming the main interface made available via MQTTs), the coordinating EVSE could for example advertise an mqtts service on the default 8883 port.

This should enforce mTLS, and all EVSEs shall be able to prove their legitimacy in the system, for example via a pre-provisioning or commissioning-triggered process..

For example, the broker service being made available on an external interface (and the advertisement of it) might be disabled in the case that vehicle interface modules are available.

Advertisement of apis for human machine interfaces (HMIs) can be advertised as well. The same is true for a local service interface which could, under some circumstances, be listening. Interfaces related to externally accessible services require authentication.

Alternatively, or in addition a fieldbus-related discovery/detection of the hardware modules can be implemented.

For example, connections to a fieldbus could be used as a test as to whether the node has power-delivery functionality, or physical connections of pins on boards when mounting, etc.

In some embodiments, the EVSE carries out the detection/discovery of the hardware modules as follows: after the start of the EVSE a minimal self-discovery is carried out and if a known configuration is detected said configuration is checked and a start up is performed. Conversely if a known configuration is not detected, a full discovery is carried out. If the full discovery is successful the determined configuration is checked.

If a check is not successful or a successful discovery/detection of the hardware modules was not possible a repair or self-discovery may be carried out again and/or an error may be flagged.

The present disclosure therefore provides one or more of the following benefits:
- a flexible EVSE which can be extended via extension hardware modules, where the control scheme of the EVSE is based on control routines (software) on a memory of the controller unit of the EVSE that are the same regardless of which modules are installed or active. This enables a single hardware and software stack to cover and scale to multiple topologies in a distributed EVSE system and self-configure. The advantage is to reduce the variety of parts/boards and to allow reuse and improve spare part handling,
- a minimization of variants of hardware and software. The same controller unit for controlling the EVSE can be deployed with the same control routines (software) in various system setups of a distributed EVSE system,
- a self-discovery of the installed topology, which is implemented by each EVSE discovering its function, advertising its capabilities, and leading to a full system topology - the base software then enables or disables certain software functions based on those that are needed for its function,
- the discovered/detected full system topology can be compared to the as-engineered configuration (done offline) of a digital twin to assist with installation, configuration, and commissioning,
- in the case of a technical error in one EVSE (for example, a EVSE with an edge gateway function losing its upstream network connection), the error could be detected, and another compatible EVSE (i.e., another EVSE in the system with an upstream connection) can take over that function and communicate this to the others EVSEs in the EV charging infrastructure thereby providing redundancy and fault tolerance,
- management of updates and compatibility of submodules since the control routines (software) are the same on each controller unit of each EVSE in a distributed EVSE system in a EV charging infrastructure. The EVSE which is discovered as the coordinating one only needs to distribute the same software package that it is running, and the other EVSE in the system then receive and install this or operate accordingly.

For example, if the EVSE 210 indicated with E2 in FIG. 3A is malfunctioning, an error is detected and for example the EVSE indicated with E4 in FIG. 3A takes over the functions of the faulty EVSE E2.

The present disclosure provides the discussed benefits providing:
- a controller unit for controlling an EVSE with one or more hardware modules, which can be deployed with various functions within a same charging infrastructure with the same software image providing the same control routines,
- a self-discovery of the function of each individual EVSE in the distributed EVSE system, wherein the aggregate of these self-discoveries leads to a system topology being discovered, and much of the system being automatically configured,
- an optional comparison against an as-engineered representation of the topology which is available to be synced from a digital twin,
- tools for non-expert commissioning or service engineers may provide further troubleshooting, discovery of errors in the digital twin's installation and the actual installation,
- under certain problem circumstances, one EVSE could take over a broken function in another EVSE and trigger a rediscovery and therefore add redundancy in the system dynamically.

In some embodiments, the control routines may comprise a safety routine configured to monitor a charging cable or connector and to detect electric shock hazards by continuously monitoring ground integrity and insulation resistance.

In some embodiments, the control routines may comprise a charging routine further configured to start and stop the charging session based at least in part on a pre-charge and disconnect sequence to protect components from surge currents during power transitions.

In some embodiments, the power electronics of the EVSE may include AC-DC and/or DC-DC conversion modules, switch matrices.

In some embodiments, the control routines are configured to implement a control scheme based on setpoints for voltage, current and/or power delivery.

In some embodiments, the control routines include an EV communication routine configured to implement an exchange of information with the EV including information about charging requirements and/or battery status and/or vehicle identification.

In some embodiments, the control routines include an orchestrating routine comprising a predictive analytics configured to forecast charging demand and to adjust allocation accordingly, maximizing utilization of available power resources.

In some embodiments, the configuration of the at least one other EVSE may be based on one or more hardware modules of the another EVSE as detected by another controller unit for controlling the another EVSE.

Preferably, the control scheme is based on the determination of functions provided by the one or more hardware modules of the EVSE and/or the one or more hardware modules of the other EVSE, the functions including one or more of charging function, switching functions, vehicle communication functions and implemented with corresponding routines among the stored control routines.

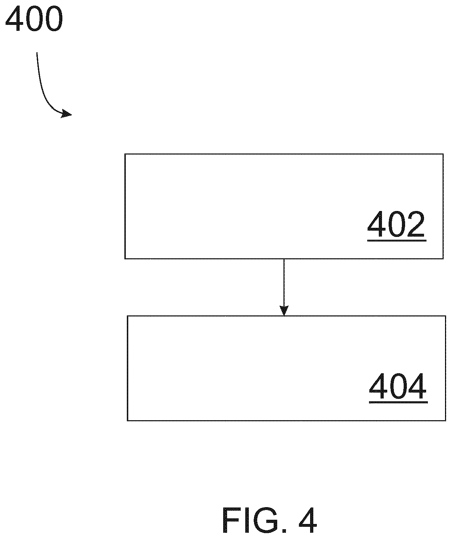

FIG. 4 shows a method 400 for controlling an electric vehicle charging infrastructure according to embodiments of the present disclosure.

The method 400 for controlling the electric vehicle charging infrastructure comprises installing 402 and/or updating a common software on each controller unit and controlling 404 each EVSE based at least in part on a control scheme determined by a controller unit.

The electric vehicle charging infrastructure controlled according to method 400 may comprise one or more EVSE as the EVSE shown in FIG. 1, FIG. 2, FIG. 3 and the controller units may be for example the controller units 100, 200.

The control method 400 is therefore capable of controlling electric vehicle charging infrastructure previously described according to the present disclosure comprising one or more EVSE as previously described according to the present disclosure comprising controller units 100, 200 as previously described according to the present disclosure.

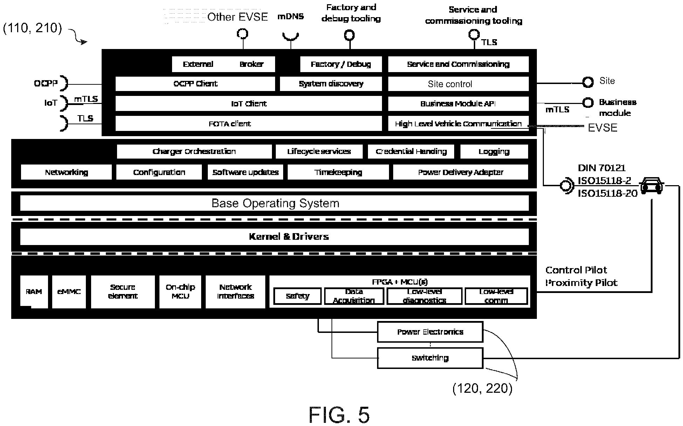

Fig. 5 shows an EVSE including a controller and hardware modules according to embodiments.

An EVSE (110, 210) may be implemented as described in FIG. 5, in particular with the presence of one or more hardware modules (120, 220).

The hardware modules may handle a direct delivery of electric energy towards the electric vehicle via power electronics and/or an indirect delivery via switching devices connected to further power electronics.

The hardware modules may be connected to the EVSE via one or more FPGAs (Field Programmable Gate Arrays) or MCUs (microcontroller units).

Next, some further possible embodiments, that can be combined with other embodiments but not necessarily tied to other details of any embodiment, are described, with reference signs only generally referring to the Figures for illustration but without being limited to other details shown in the Figures.

According to embodiments, at least one of the following is provided:
a controller unit 100 for controlling an electric vehicle supply equipment 110, EVSE, with one or more hardware modules for charging an electric vehicle, EV, the controller unit comprising:
   - a processing unit configured to detect one or more hardware modules of the EVSE;
   - the processing unit 102 further configured to determine a configuration of the electric vehicle supply equipment 110, the configuration including data indicative of the detected hardware modules of the EVSE;
the controller unit(100 being further configured to dynamically determine a control scheme of the EVSE based on the determined configuration of the EVSE, wherein the processing unit 102 has a memory 106 with stored control routines, and wherein the controller unit is configured for including selected control routines in the control scheme, the selected control routines being selected from the stored control routines based on the determined configuration of the EVSE,
wherein the controller unit 100 is configured for installing and updating the control routines over a network interface,
and is further configured to control the EVSE 110 based on the determined control scheme.

In some embodiments, that can be combined with other embodiments, the controller unit further comprises a communication interface 104, the processing unit further being configured to discover at least one other EVSE connected to the EVSE via the communication interface (104), the communication interface (104) further configured to establish a communication link with at least one other controller unit of the at least one other electric vehicle supply equipment, the communication interface configured to receive a configuration of the at least one other electric vehicle supply equipment and to send the configuration of the electric vehicle supply equipment to the at least one other electric vehicle supply equipment;
and wherein the control scheme of the EVSE is further based on the configuration of the at least one other electric vehicle supply equipment received by the communication interface.

In some embodiments, that can be combined with other embodiments, the stored control algorithms include at least:
a) A safety routine for monitoring the health and integrity of a charging hardware component of the EVSE and for initiating a response action in response to a detected hazardous condition;
b) An EV communication routine for carrying out high-level communication with the EV;
c) A charging routine for charging the EV by the EVSE, the charging routine including at least one of: operating the vehicle charger, in particular starting and stopping a charging session based on vehicle and user input;
d) A power electronics control routine for controlling power electronics of the EVSE by setting setpoints; managing switching operations of a charging system to ensure smooth and safe transitions between different charging states; adjusting charging rates based on vehicle battery state and grid conditions to optimize efficiency and minimize impact on the power grid;
e) An orchestrating routine for orchestrating the budgeting of power supplies across multiple vehicles, optimizing power allocation for efficient charging,

In some embodiments, that can be combined with other embodiments, hardware modules include one or more of an AC-DC inverter module, a DC-DC converter module, a switching-matrix module, a power delivery module, a user interface module.

In some embodiments, that can be combined with other embodiments, determining a configuration of the electric vehicle supply further comprises determining a type of the EVSE based on the detected hardware modules of the EVSE, the type being in particular selected from the list comprising a power converter station, a charging station, a power delivery station, a user interface station.

In some embodiments, that can be combined with other embodiments, the controller is configured to install or update the control routines irrespective of their inclusion in the control scheme;
And the controller unit further comprises a backend connection (OCFC) for remote supervision and/or for the installation and/or update of the stored control routines.

In some embodiments, that can be combined with other embodiments, the control is further dependent on a state of at least one other electric vehicle supply equipment received over the network interface.

In some embodiments, that can be combined with other embodiments, the controller unit is further configured to compare the determined configuration to a specification stored in the memory based on a digital twin of a charging station to validate the determined configuration and to flag a result of said validation, in particular to flag an error when the determined configuration is not in agreement with the specification based on the digital twin.

In some embodiments that can be combined with other embodiments, the controller unit is further configured for updating the specification stored in the memory based on the digital twin over the network interface, in particular together with an update of the control routines.

The present disclosure further provides an electric vehicle supply equipment 110, EVSE, comprising at least one controller unit 100 according to embodiments of the present disclosure and configured for controlling the at least one electric vehicle supply equipment.

In some embodiments, that can be combined with other embodiments, the at least one electric vehicle supply equipment further comprises a plurality of EVSE hardware modules, the controller having stored data regarding the detection of the EVSE hardware modules and the configuration being based on the detected EVSE hardware modules, the EVSE being arranged in a cabinet.

The present disclosure further provides an electric vehicle charging infrastructure comprising a plurality of electric vehicle supply equipment, EVSE according to embodiments of the present disclosure, and wherein the at least one controller unit of each of the electric vehicle supply equipment of the plurality of electric vehicle supply equipment is configured with the same stored control routines, in particular with the same control routines installed and/or updated via the network interface of the at least one controller unit.

In some embodiments, that can be combined with other embodiments, the vehicle charging infrastructure comprises at least a first EVSE 110 according to embodiments of the present disclosure, the first EVSE's controller being a first controller 100, and a second EVSE (210) according to embodiments of the present disclosure, the second EVSE's controller 200 being a second controller, wherein the first electric vehicle supply equipment EVSE and the first controller unit are located in a common cabinet, and the second electric vehicle supply equipment and the second controller unit are located in a remote post distant from the cabinet.

According to some embodiments, that can be combined with other embodiments, the first electric vehicle supply equipment EVSE comprising the first controller unit located in the common cabinet further comprises power electronics modules and the second electric vehicle supply equipment EVE comprising the second controller unit located in the remote post further comprises a switching device module configured to be connected to the power electronics of the first EVSE, the switching device module configured to establish a connection with the power electronics module and to deliver power from the power electronics module to an EV;
wherein the first controller unit controls in particular the power electronics module based on the control scheme determined by the first controller unit and the second controller unit controls in particular the switching device module based on the control scheme determined by the second controller unit.

The present disclosure further provides a method 400 for controlling the electric vehicle charging infrastructure of embodiments of the present disclosure, the method comprising installing 402 and/or updating a common software on each controller unit and controlling 404 each EVSE based at least in part on a control scheme determined by a controller unit.

## Claims

1. A controller unit (100) for controlling an electric vehicle supply equipment (110), EVSE, with one or more hardware modules for charging an electric vehicle, EV, the controller unit comprising:
- a processing unit configured to detect one or more hardware modules (120) of the EVSE;
- the processing unit (102) further configured to determine a configuration of the electric vehicle supply equipment (110), the configuration including data indicative of the detected hardware modules (120) of the EVSE (110);
the controller unit (100) being further configured to dynamically determine a control scheme of the EVSE based on the determined configuration of the EVSE, wherein the processing unit (102) has a memory (106) with stored control routines, and wherein the controller unit is configured for including selected control routines in the control scheme, the selected control routines being selected from the stored control routines based on the determined configuration of the EVSE,
wherein the controller unit (100) is configured for installing and updating the control routines over a network interface,
and is further configured to control the EVSE (110) based on the determined control scheme.

2. The controller unit of claim 1, further comprising
a communication interface (104), the processing unit further being configured to discover at least one other EVSE connected to the EVSE via the communication interface (104), the communication interface (104) further configured to establish a communication link with at least one other controller unit of the at least one other electric vehicle supply equipment, the communication interface configured to receive a configuration of the at least one other electric vehicle supply equipment and to send the configuration of the electric vehicle supply equipment to the at least one other electric vehicle supply equipment;
and wherein the control scheme of the EVSE is further based on the configuration of the at least one other electric vehicle supply equipment received by the communication interface.

3. The controller unit of any of claims from 1 to 2, wherein the stored control algorithms include at least:
a) A safety routine for monitoring the health and integrity of a charging hardware component of the EVSE and for initiating a response action in response to a detected hazardous condition;
b) An EV communication routine for carrying out high-level communication with the EV;
c) A charging routine for charging the EV by the EVSE, the charging routine including at least one of: operating the vehicle charger, in particular starting and stopping a charging session based on vehicle and user input;
d) A power electronics control routine for controlling power electronics of the EVSE by setting setpoints; managing switching operations of a charging system to ensure smooth and safe transitions between different charging states; adjusting charging rates based on vehicle battery state and grid conditions to optimize efficiency and minimize impact on the power grid;
e) An orchestrating routine for orchestrating the budgeting of power supplies across multiple vehicles, optimizing power allocation for efficient charging,

4. The controller unit of any of claims from 1 to 3, wherein hardware modules include one or more of an AC-DC inverter module, a DC-DC converter module, a switching-matrix module, a power delivery module, a user interface module.

5. The controller unit of any of claims from 1 to 4, wherein determining a configuration of the electric vehicle supply further comprises determining a type of the EVSE based on the detected hardware modules of the EVSE, the type being in particular selected from the list comprising a power converter station, a charging station, a power delivery station, a user interface station.

6. The controller unit of any of claims from 1 to 5, being configured to install or update the control routines irrespective of their inclusion in the control scheme;
the controller unit further comprising a backend connection (OCFC) for remote supervision and/or for the installation and/or update of the stored control routines.

7. The controller unit of any of claims from 1 to 6, wherein the control is further dependent on a state of at least one other electric vehicle supply equipment received over the network interface.

8. The controller unit of any of claims from 1 to 7, wherein the controller unit is further configured to compare the determined configuration to a specification stored in the memory based on a digital twin of a charging station to validate the determined configuration and to flag a result of said validation, in particular to flag an error when the determined configuration is not in agreement with the specification based on the digital twin.

9. The controller unit of claim 8, wherein the controller unit is further configured for updating the specification stored in the memory based on the digital twin over the network interface, in particular together with an update of the control routines.

10. An electric vehicle supply equipment (110), EVSE, comprising at least one controller unit (100) according to any of claims from 1 to 9 configured for controlling the at least one electric vehicle supply equipment.

11. The electric vehicle supply equipment of claim 10, wherein the at least one electric vehicle supply equipment further comprises a plurality of EVSE hardware modules, the controller having stored data regarding the detection of the EVSE hardware modules and the configuration being based on the detected EVSE hardware modules, the EVSE being arranged in a cabinet.

12. An electric vehicle charging infrastructure comprising a plurality of electric vehicle supply equipment, EVSE according to any of claims from 10 to 11, and wherein the at least one controller unit of each of the electric vehicle supply equipment of the plurality of electric vehicle supply equipment is configured with the same stored control routines, in particular with the same control routines installed and/or updated via the network interface of the at least one controller unit.

13. The vehicle charging infrastructure of claim 12, comprising at least a first EVSE (110) according to any one of claims 10 and 11, the first EVSE's controller being a first controller (100), and a second EVSE (210) according to any one of claims 10 and 11, the second EVSE's controller (200) being a second controller, wherein the first electric vehicle supply equipment EVSE and the first controller unit are located in a common cabinet, and the second electric vehicle supply equipment and the second controller unit are located in a remote post distant from the cabinet.

14. The electric vehicle charging infrastructure of any of claims from 12 to 13, wherein the first electric vehicle supply equipment EVSE comprising the first controller unit located in the common cabinet further comprises power electronics modules and the second electric vehicle supply equipment EVE comprising the second controller unit located in the remote post further comprises a switching device module configured to be connected (130) to the power electronics of the first EVSE, the switching device module configured to establish a connection with the power electronics module and to deliver power from the power electronics module to an EV;
wherein the first controller unit controls in particular the power electronics module based on the control scheme determined by the first controller unit and the second controller unit controls in particular the switching device module based on the control scheme determined by the second controller unit.

15. A method (400) for controlling the electric vehicle charging infrastructure of any of claims from 12 to 14, the method comprising: providing (402) a common software on each controller unit, and controlling (404) each EVSE based at least in part on the control scheme determined by the controller unit.
